# EUROPÄISCHE PATENTSCHRIFT

(11) **EP 1 757 847 B1**
(45) Veröffentlichungstag und Bekanntmachung des Hinweises auf die Patenterteilung: **09.01.2008**
(21) Anmeldenummer: 06015941.5
(22) Anmeldetag: 01.08.2006
(51) Int. Cl.: F16H 63/32

(54) **Schaltgabel und entsprechendes Herstellungsverfahren**
Shift fork and associated manufacturing method
Fourchette de changement de vitesses et méthode de fabrication associée

(30) Priorität: 27.08.2005 DE 102005040692
(43) Veröffentlichungstag der Anmeldung: 28.02.2007
(73) Patentinhaber: Schaeffler KG, 91074 Herzogenaurach (DE)
(72) Erfinder: Pechtl, Volker, 92224 Amberg (DE)

(56) Entgegenhaltungen:
- DE-A1- 10 126 436
- DE-A1- 10 126 437
- DE-A1- 10 207 833
- DE-A1- 10 360 261
- DE-A1- 10 360 262

## Beschreibung

### Gebiet der Erfindung

Die Erfindung betrifft ein Verfahren zur Herstellung einer Schaltgabel mit zumindest einem gabelförmig ausgebildeten Grundkörper und Gleitschuhen. Das Dokument DE-A-101 26 436 offenbart ein Verfahren und eine Schaltgabel mit allen Merkmalen der Oberbegriffe der unabhängigen Ansprüche 1 und 7.

### Hintergrund der Erfindung

Eine Schaltgabel der gattungsbildenden Art ist in DE 199 44 323 A1 beschrieben. An einem gabelförmig ausgebildeten Blechformteil sind an den freien Enden Gleitschuhe vorgesehen. Derartige Schaltgabeln sind weitestgehend ohne spanabhebende Bearbeitung durch Umformung von Blech, z. B. mittels Stanzen, Ziehen oder Pressen bzw. durch Kombinationen dieser Verfahren hergestellt. Deshalb sind die Schaltgabeln aus Blech besonders in der Massenproduktion kostengünstig herzustellen und werden immer häufiger eingesetzt. An dem Stahlblech lassen sich in einfacher Weise weitere Konstruktionselemente aus Stahl durch Schweißen oder mittels anderer Verbindungsarten anbringen. So ist beispielsweise die Schaltgabel nach DE 199 44 323 A1 mit einer aus Flacheisen hergestellten Schaltstange verbunden. Aufwendig ist allerdings die Befestigung der Gleitschuhe an dem Stahlblech der Schaltgabel, denn die

Gleitschuhe an derartigen Schaltgabeln sind zumeist aus gleitförderndem Material und nicht aus Stahl gefertigt. Nach dem Stand der Technik werden für Gleitschuhe Materialien wie z. B. Kunststoff oder Messing vorgesehen. Messing ist ein Werkstoff, der häufig angewendet wird, da dieser außer hervorragenden selbstschmierenden Laufeigenschaften eine relativ hohe Verschleißfestigkeit aufweist. Die Befestigung derartiger Gleitschuhe an den freien Enden der Schaltgabel durch Schweißen ist bei Dünnblechschaltgabeln problematisch, da sich die Schaltgabeln verziehen.

Oftmals ist Herstellen einer stoffschlüssigen Verbindung durch Schweißen aufgrund fehlender Schweißeignung der zu verschweißenden Stoffe bzw. fehlender Kombinationsfähigkeit der Schweißeignungen unterschiedlicher Stoffe auch nicht geeignet, um Gleitschuhe an der Schaltgabel zu befestigen. In einem solchen Fall können Gleitschuhe durch beispielsweise Clipsen befestigt werden. Diese Befestigungsart erfordert allerdings eine hohe Genauigkeit bei der Herstellung, und auch die Montage ist relativ aufwendig, weswegen dieses Verfahren kostenintensiv ist.

### Zusammenfassung der Erfindung

Die Aufgabe der Erfindung ist es daher, ein Verfahren zur Herstellung einer Schaltgabel aus Blech mit Gleitschuhen zu schaffen, welches unter der Vermeidung der vorgenannten Nachteile eine wirtschaftliche Herstellung ermöglicht. Diese Aufgabe ist durch das Verfahren des kennzeichnenden Teils des Anspruchs 1 dadurch gelöst, dass in einem ersten Verfahrensschritt das Blech zusammen mit einem Gleitschuhblech in ein Umformwerkzeug eingelegt wird und das in einem zweiten Verfahrensschritt das Blech entsprechend der benötigten Geometrie zusammen mit dem Gleitschuhblech zur Schaltgabel umgeformt wird. Aus Stabilitätsgründen ist es dabei besonders vorteilhaft, wenn das Blech und das Gleitschuhblech zusammen zu U-förmig umgeformt werden, wobei die Schenkel des U des Gleitschuhblechs länger als diejenigen diejenigen des Blechs sind.

Ausgestaltungen der Erfindung sehen vor, dass in weiteren Verfahrensschritten das Blech und das Gleitschuhblech verliersicher miteinander verbunden werden, indem das Gleitschuhblech umlaufend gebördelt und/oder mit Kanten, Absätzen und/oder Radien versehen wird. In jedem Fall werden der Grundkörper der Schaltgabel und der Gleitschuh zusammen umgeformt. Im Schaltgetriebe greift damit die Schaltgabel über die Gleitschuhe in die Schiebemuffe ein und stellt mit dieser einen relativ verschleißfesten Formschluss dar. Für den Verschleiß ist lediglich die Anlagefläche der Schaltgabel zur Schiebemuffe relevant.

Ein besonders geeignetes Material für das Gleitschuhblech ist relativ teueres Messing. In besonders vorteilhafter Weise ist es durch das erfinderische Verfahren möglich, durch Verwendung eines entsprechend angepassten Messingblechs den Materialeinsatz zu minimieren und somit die Kosten zu senken. Die Gleitschuhe müssen nämlich die Gabelenden nicht vollständig umschließen, sondern nur im Bereich der Anlagefläche zur Schiebemuffe Messing aufweisen. Durch das gleichzeitige Umformen entsteht eine hohe Formtreue, da einerseits kein undefinierter Materialauftrag wie beispielsweise beim Umspritzen erfolgt und andererseits keine Toleranzen ergeben, wie sie zwangsläufig bei separater Fertigung des Grundkörpers und der Gleitschuhe auftreten würden.

Ein weiterer Vorteil erwächst aus der Handhabbarkeit, da es einfacher ist, zwei ebene Bleche gemeinsam in das Umformwerkzeug einzulegen, als fertig geformte Teile zueinander auszurichten und zu fixieren. Zudem funktioniert das Verfahren auch, wenn das Gleitschuhblech nicht ganz exakt positioniert wird, da dies den Umformprozess nicht behindert.

Das Blechmaterial des Gleitschuhs ist nicht auf Messing beschränkt, sondern umfasst Flachmaterial, das sich umformtechnisch verarbeiten lässt. Dazu zählen insbesondere auch beschichtete Bleche. Weiterhin ist es durch das erfinderische Verfahren besonders einfach, eine Schaltgabel auf verschiedene Schiebemuffenbreiten anzupassen, indem unterschiedlich dicke Gleitschuhbleche verwendet werden. Dabei ist nur eine leichte Modifikation des Herstellungswerkzeugs erforderlich, weswegen sich das erfindungsgemäße Verfahren gerade besonders für Kleinserien von Schaltgetrieben eignet, die von einem Grundtypus leicht abweichen.

Schließlich ist es durch das Entfallen eines Schweißvorgangs möglich, mit besonders dünnen Blechstärken der Schaltgabel zu arbeiten, wodurch wiederum Masse und Bauraum eingespart werden kann.

### Kurze Beschreibung der Zeichnungen

Die Erfindung ist nachfolgend anhand eines Ausführungsbeispiels beschrieben. Es zeigen:
- Figur 1: schematisch und perspektivisch einen Ausschnitt eines ebenen Blechs und eines ebenen Gleitschuhblechs vor dem Umformen durch ein Umformwerkzeug;
- Figur 2: das Blech und das Gleitschuhblech nach Figur 1 nach dem Umformen;
- Figur 3: das Blech und das Gleitschuhblech nach Figur 2 nach dem Fixieren;
- Figur 4: einen Querschnitt einer erfindungsgemäßen Schaltgabel mit einem Grundkörper und Gleitschuhen;
- Figur 5: einen vergrößerten Längsschnitt der Schaltgabel nach Figur 4 entlang der Linie V-V;
- Figur 6: eine vergrößerte Darstellung des Schaltgabelendes nach Figur 4;
- Figur 7: eine vergrößerte Darstellung des Schaltgabelendes nach Figur 5;
- Figur 8: einen vergrößerten Querschnitt des Schaltgabelendes nach Figur 5 entlag der Linie VIII-VIII; und
- Figur 9: eine perspektivische Ansicht einer Schaltgabel, die nach dem erfinderischen Verfahren hergestellt wurde.

### Detaillierte Beschreibung der Zeichnungen

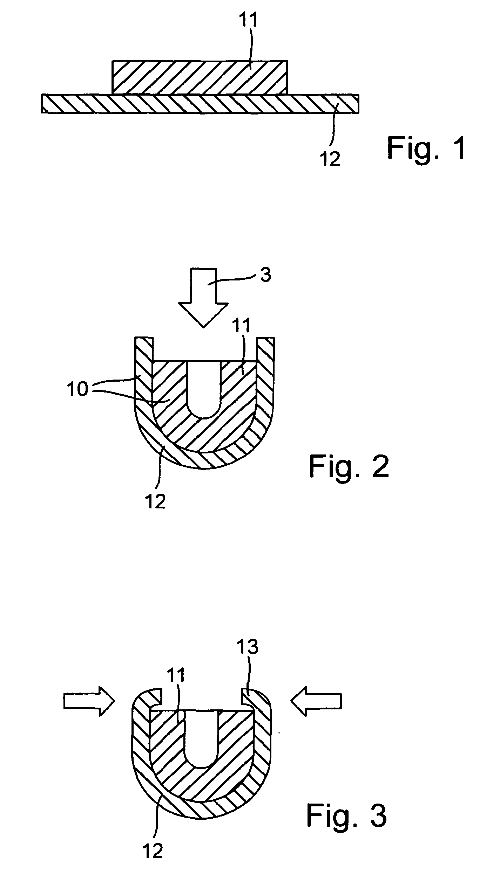

Die Figuren 1 bis 3 zeigen nicht maßstabsgenau die erfindungsgemäßen Verfahrensschritte zur Herstellung einer Schaltgabel 1 aus Blech 11 mit Gleitschuhen 9. Die Schaltgabel 1 ist ein Formteil, das insbesondere durch die Untergruppen Senkformen bzw. durch Drücken der Verfahrensgruppe Druckumformen hergestellt ist. Die einzelnen Komponenten der Schaltgabel 1 werden in diesem Verfahren zunächst als Einzelteile bevorzugt durch Umformen und Stanzen hergestellt. Dabei wird vor Beginn des Umformvorgangs des Blechs 11 zur Schaltgabel 1 ein Gleitschuhblech 12 mit in das nicht dargestellte Umformwerkzeug eingelegt (Figur 1), wobei das Umformwerkzeug durch die von ihm ausgehende Umformkraft 3 symbolisiert ist.

Wie Figur 2 zeigt, werden in einem nächsten Arbeitsschritt beide Bleche 11 und 12 gemeinsam durch dasselbe Werkzeug umgeformt. In einem einfachen Fall ergibt sich durch eine orthogonal zur Blechebene angreifende Kraft ein U-förmiges Querschnittsprofil 10 mit Rippen 7 und 8, über welche die Schaltgabel im Getriebe im eingebauten Zustand eine Schaltmuffe auf ein Gangrad verschiebt. Die endgültige Form des Querschnittsprofils 10 hängt dabei von dem verwendeten Umformwerkzeug ab.

In besonders vorteilhafter Weise wird in einem dritten Verfahrensschritt das Gleitschuhblech 12 umlaufend gebördelt und so durch einen so entstehenden Bord 13 gegen Verlust gesichert (Figur 3). Dabei ist dieser Verfahrensschritt optional, da die Erfindung auch andere Sicherungsmaßnahmen wie Kantenabsätze oder das Einbringen von Radien umfasst, um den Formschluss zu sichern. Um diesen Verfahrensschritt ausführen zu können, ist es erforderlich, dass im Ausgangszustand das Gleitschuhblech 12 breiter als das Blech 11 ist, weil die durch das Umformen entstandene Krümmung des Gleitschuhblechs kleiner ist, damit genügend Material für die Sicherungsmaßnahmen zur Verfügung steht.

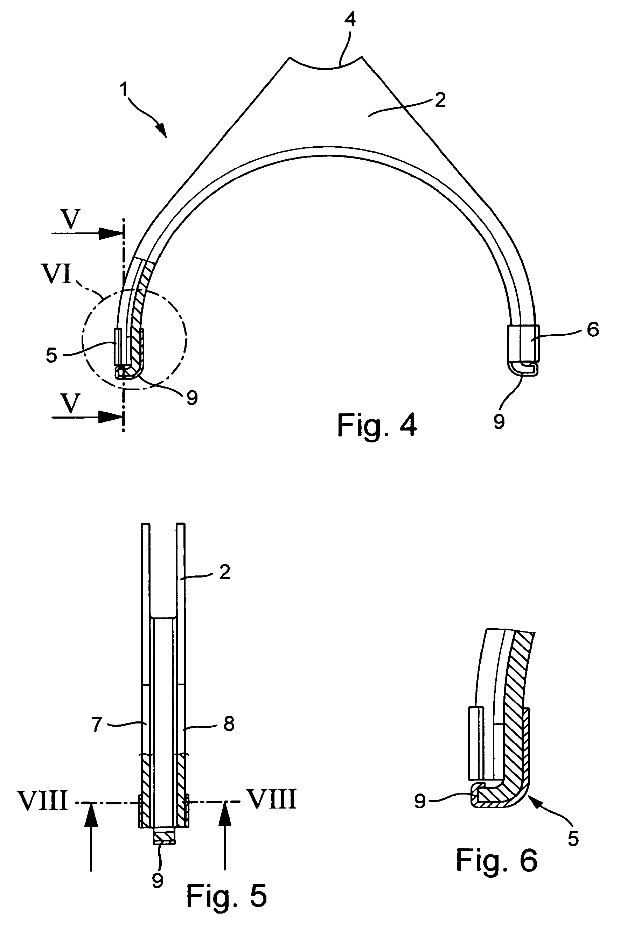

Figur 4 zeigt ein Ausführungsbeispiel der erfindungsgemäß hergestellten Schaltgabel 1. Die Schaltgabel 1 weist einen Grundkörper 2 mit einer etwa halbkreisförmigen Gabel und einer nicht dargestellten Führung auf, mit der der Grundkörper 2 über seine Basis 4 verbunden ist. Der Grundkörper 2 ist ein gabelförmig ausgebildetes Blechformteil. An Gabelenden 5 und 6 sind Gleitschuhe 9 befestigt. Das Blechformteil des Grundkörpers 2 ist so verformt, dass von den Gabelenden 5 und 6 wegweisende Rippen 7 und 8 in Richtung der Führung abgewinkelt sind. Die Rippen 7 und 8 liegen längs zur Führung zueinander parallel ausgerichtet, so dass der Grundkörper 2 an der Anbindung zur Führung ein U-förmiges Profil 10 aufweist.

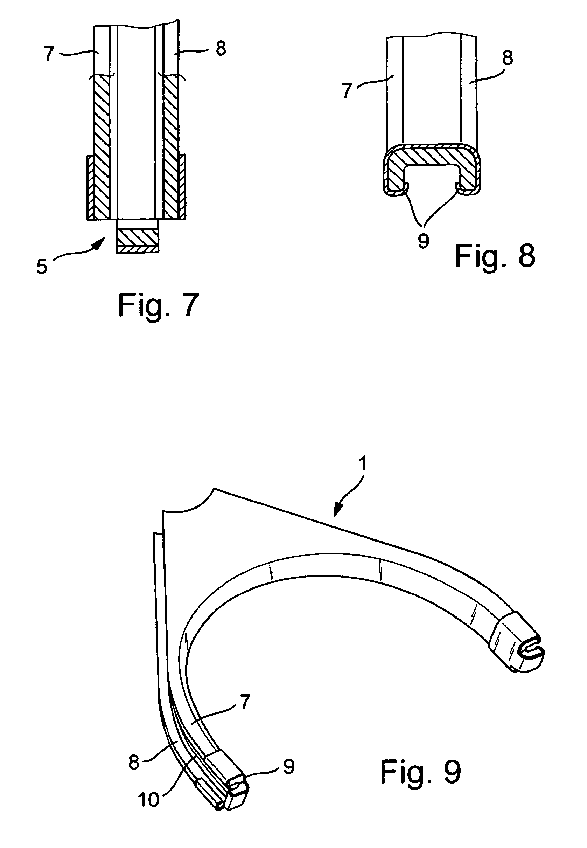

Die Figuren 5 bis 9 zeigen, dass die Gleitschuhe 9 aus einem Gleitschuhblech 12, das in vorteilhafter Ausgestaltung aus Messing besteht, hergestellt sind, dessen Stärke erheblich geringer ist als die des Blechs 11. Das Gleitschuhblech ist durch den Bord 13 verliersicher mit dem Grundkörper 2 gehalten.

### Bezugszahlenliste

- 1: Schaltgabel
- 2: Grundkörper
- 3: Kraft
- 4: Basis
- 5: Gabelende
- 6: Gabelende
- 7: Rippe
- 8: Rippe
- 9: Gleitschuh
- 10: U-förmiges Profil
- 11: Blech
- 12: Gleitschuhblech
- 13: Bord

## Patentansprüche

1. Verfahren zur Herstellung einer Schaltgabel (1) aus Blech (11) mittels Kaltumformen, wobei die Schaltgabel (1) einen Grundkörper (2) mit gabelförmigen Enden (5, 6) aufweist, wobei zumindest ein Ende (5,6) zumindest einen Gleitschuh (9) aufweist, **dadurch gekennzeichnet, dass** in einem ersten Verfahrensschritt das Blech (11) zusammen mit einem Gleitschuhblech (12) in ein Umformwerkzeug eingelegt wird und dass in einem zweiten Verfahrensschritt das Blech (11) entsprechend der benötigten Geometrie zusammen mit dem Gleitschuhblech (12) zur Schaltgabel (1) umgeformt wird.

2. Verfahren nach Anspruch 1, **dadurch gekennzeichnet, dass** das Blech (11) und das Gleitschuhblech (12) im zweiten Verfahrensschritt derart umgeformt werden, dass beide ein U-förmiges Profil (10) aufweisen.

3. Verfahren nach Anspruch 1, **dadurch gekennzeichnet, dass** das Blech (11) ein Stahlblech ist.

4. Verfahren nach Anspruch 1, **dadurch gekennzeichnet, dass** das Gleit-schuhblech (12) ein Messingblech ist.

5. Verfahren nach Anspruch 1, **dadurch gekennzeichnet, dass** das Umformwerkzeug ein Umformen von Gleitschuhblechen (12) verschiedener Dicken D zulässt.

6. Verfahren zur Herstellung einer Schaltgabel nach einem der Ansprüche 1 bis 5, **dadurch gekennzeichnet, dass** in einem dritten Verfahrensschritt das Gleitschuhblech (12) formschlüssig mit der Schaltgabel (1) verbunden wird, indem es umlaufend gebördelt und/oder mit Kanten, Absätzen und/oder Radien versehen wird.

7. Schaltgabel (1) eines Fahrzeuggetriebes mit einem gabelförmig ausgebildeten Grundkörper (2) aus Blech (11) und mit zumindest einem Gleitschuh (9) aus Gleitschuhblech (12) an dem Grundkörper, **dadurch gekennzeichnet, dass** die Schaltgabel durch ein Verfahren nach Anspruch 1 hergestellt ist, und dass der Grundkörper (2) und der Gleitschuh (9) formschlüssig miteinander verbunden sind.

## Claims

1. Method of making a gearshift fork (1) out of sheet metal (11) by cold forming, said gearshift fork (1) comprising a base body (2) with forked ends (5, 6), at least one of said ends (5, 6) comprising at least one sliding shoe (9), **characterised in that**, in a first method step, the sheet metal (11) is inserted together with a sliding shoe sheet metal (12) into a forming tool and, in a second method step, the sheet metal (11) is shaped together with the sliding shoe sheet metal (12) to form the gearshift fork (1) in accordance with the required geometry.

2. Method according to claim 1, **characterised in that** the sheet metal (11) and the sliding shoe sheet metal (12) are formed in such a way in the second method step that both receive a U-shaped profile (10).

3. Method according to claim 1, **characterised in that** the sheet metal (11) is a sheet steel.

4. Method according to claim 1, **characterised in that** the sliding shoe sheet metal (12) is a sheet brass.

5. Method according to claim 1, **characterised in that** the forming tool permits a forming of sliding shoe sheet metals (12) of different thicknesses D.

6. Method of making a gearshift fork according to one of claims 1 to 5, **characterised in that**, in a third method step, the sliding shoe sheet metal (12) is connected to the gearshift fork (1) by positive engagement by being provided with an all-round bent-over rim and/or edges, shoulders and/or radii.

7. Gearshift (1) of a vehicle transmission, with a fork-shaped base body (2) out of sheet metal (11) and with at least one sliding shoe (9) out of sliding shoe sheet metal (12) on the base body, **characterised in that** the gearshift fork is made by a method according to claim 1 and that the base body (2) and the sliding shoe (9) are connected to each other by positive engagement.

## Revendications

1. Méthode de fabrication d'une fourchette (1) de changement de vitesse en tôle (11) par formage à froid, ladite fourchette (1) de changement de vitesse comprenant un corps de base (2) ayant des extrémités bifurquées (5, 6), au moins l'une desdites extrémités (5, 6) comprenant un patin (9) de glissement, **caractérisée en ce que** dans une première étape de la méthode, la tôle (11) est insérée conjointement avec une tôle (12) de patin de glissement dans un outil de formage et que, dans une seconde étape de la méthode, la tôle (11) est formée conjointement avec la tôle (12) de patin de glissement en la fourchette (1) de changement de vitesse selon la géométrie voulue.

2. Méthode selon la revendication 1, **caractérisée en ce que**, dans la seconde étape de la méthode, la tôle (11) et la tôle (12) de patin de glissement sont formées de telle façon que chacune d'elles a un profil (10) en forme de U.

3. Méthode selon la revendication 1, **caractérisée en ce que** la tôle (11) est une tôle d'acier.

4. Méthode selon la revendication 1, **caractérisée en ce que** la tôle (12) de patin de glissement est une tôle de laiton.

5. Méthode selon la revendication 1, **caractérisée en ce que** l'outil de formage permet un formage de tôles (12) de patin de glissement d'épaisseurs D différentes.

6. Méthode de fabrication d'une fourchette de changement de vitesse selon l'une des revendications 1 à 5, **caractérisée en ce que**, dans une troisième étape de la méthode, la tôle (12) de patin de glissement est reliée à la fourchette (1) de changement de vitesse par concordance de forme par un rabattement périphérique de bord et/ou en la munissant de bords, d'épaules et/ou de rayons.

7. Fourchette (1) de changement de vitesse pour un véhicule automobile, avec un corps de base (2) configuré en forme bifurquée en tôle (11) et avec, au moins, un patin (9) de glissement en tôle (12) de patin de glissement agencé sur le corps de base, **caractérisée en ce que** la fourchette de changement de vitesse est fabriquée par une méthode selon la revendication 1 et que le corps de base (2) et le patin (9) de glissement sont reliés, l'un à l'autre, par concordance de forme.
